# EUROPÄISCHE PATENTSCHRIFT

(11) **EP 1 203 252 B1**
(45) Veröffentlichungstag und Bekanntmachung des Hinweises auf die Patenterteilung: **26.03.2003**
(21) Anmeldenummer: 00952947.0
(22) Anmeldetag: 21.07.2000
(51) Int. Cl.: G02B 6/30, G02B 26/02

(54) **OPTISCHE KOPPLUNGSEINRICHTUNG**
OPTICAL COUPLING DEVICE
DISPOSITIF DE COUPLAGE OPTIQUE

(30) Priorität: 21.07.1999 DE 19934183
(43) Veröffentlichungstag der Anmeldung: 08.05.2002
(73) Patentinhaber: SCC Special Communication Cables GmbH & Co. KG, 81379 München (DE)
(72) Erfinder: SCHWEIKER, Wolfgang, D-83620 Feldkirchen-Westerham (DE); HEISE, Gerhard, D-81739 München (DE); ALBRECHT, Helmut, D-81377 München (DE); AIGNER, Robert, D-81675 München (DE)
(74) Vertreter: Viering, Jentschura & Partner
(86) Internationale Anmeldenummer: DE0002395
(87) Internationale Veröffentlichungsnummer: WO01007948

(56) Entgegenhaltungen:
- WO-A-98/13718
- US-A- 4 864 824
- US-A- 5 390 266

## Beschreibung

Die Erfindung betrifft eine optische Kopplungseinrichtung nach dem Oberbegriff des Anspruchs 1. Hierbei ist die geometrische Position der einen Lichtwellenleiter-Endfläche beispielsweise einer Lichtleiterfaser gegenüber der anderen Lichtwellenleiter-Endfläche beispielsweise eines Lichtleiterchips mit Hilfe eines längenveränderlichen Elements veränderbar, welches über eine Halteeinrichtung den einen der beiden Lichtwellenleiter trägt und durch zwei Halteklötze an dem anderen Lichtwellenleiter befestigt ist.

Eine wie eingangs genannte optische Kopplungseinrichtung ist aus der US-A-4 864 824 bekannt.

Eine optische Kopplungseinrichtung ist beispielsweise aus der WO 98/13718 bekannt. Derartige Kopplungseinrichtungen werden in optischen Filtern nach dem Phased-Array-Prinzip mit einer Einkoppelfläche eingesetzt, in die an einer bestimmten geometrischen Position Licht eintritt, wobei die geometrische Position die Ausgangswellenlänge des optischen Filters beeinflußt. Optische Filter nach dem Phased-Array-Prinzip werden insbesondere als Multiplexer oder Demultiplexer im optischen Wellenlängenmultiplex-Betrieb (WDM) eingesetzt, da sie eine geringe Einfügedämpfung und eine hohe Nebensprechunterdrückung aufweisen. Der optische Filter weist als wesentlichen Bestandteil mehrere gekrümmt verlaufende optische Lichtwellenleiter unterschiedlicher Länge auf, die einen Phasenschieberbereich bilden.

In der deutschen Patentanmeldung DE 44 22 651.9 wird beschrieben, daß die Mittelwellenlänge eines Phased-Array-Filters durch die Position eines Einkoppel-Lichtwellenleiters, der das Licht in den Lichtwellenleiter leitet, festgelegt werden kann. Auf diese Weise kann durch die geometrische Positionierung des Einkoppel-Lichtwellenleiters oder der Einkoppelfaser die Mittelwellenlänge des optischen Filters genau justiert werden. Da es daher erwünscht ist, daß die Lichtwellenleiter relativ zueinander verschoben werden, können die Lichtwellenleiter nicht direkt miteinander verklebt werden.

Bei der eingangs genannten, optischen Kopplungseinrichtung sind die Halteklötze am Chip befestigt, und die Lichtwellenleiterfaser an dem längenveränderlichen Element gehalten. Dabei kann es zu Schwingungen oder Verbiegungen des längenveränderlichen Elements und dabei zu einer temporären oder dauerhaften Dejustage der Faser kommen, obwohl eine gewisse Führung vorgesehen ist.

Der Erfindung liegt die Aufgabe zugrunde, eine verbesserte Führung des längenveränderlichen Elements parallel zu seiner Ausdehnungsrichtung zu gewährleisten und im Betrieb eine Dejustage zu vermeiden.

Zur Lösung dieser Aufgabe ist die eingangs erwähnte, optische Kopplungseinrichtung durch die Merkmale im kennzeichnenden Teil des Anspruchs 1 gekennzeichnet. Das längenveränderliche Element, welches zwangsläufig weiter entfernt an dem anderen Lichtwellenleiter, das heißt dem Chip befestigt ist, drückt gegen die Halteeinrichtung für die Faser, um die Relativbewegung der Faser zum Chip zu ermöglichen. Das Federelement ist so gestaltet, daß eine Restbewegung senkrecht zur Ebene möglichst vollständig unterdrückt wird. Dadurch wird erreicht, daß die Bewegung der Faser relativ zum Chip sehr exakt parallel zur Chipfläche erfolgt und eine Dejustage senkrecht dazu praktisch nicht auftritt.

Da das Federelement schwammartig oder porös ausgebildet ist und die Wandstärke des Federelements so im Vergleich zu der Wandstärke des Vollmaterials vermindert wird, wird dem Federelement die gewünschte Elastizität oder Federeigenschaft erteilt. Durch Wahl des Verhältnisses von verbleibender Wandstärke und Lochstärke kann in vorteilhafte Weise die Elastizität in weiten Bereichen variiert werden.

Bei der Erfindung ist ferner vorteilhaft, daß der Halteklotz an dem zweiten Lichtwellenleiter (Lichtwellenleiterchip) sehr nahe an der Faser verklebt werden kann, wodurch große Hebel vermieden werden. Dadurch werden unerwünschte Bewegungen in die Richtungen senkrecht zur gewünschten Ausdehnung des längenveränderlichen Elements deutlich reduziert.

Eine vorteilhafte Ausgestaltung der erfindungsgemäßen Einrichtung ist dadurch gekennzeichnet, daß die Halteeinrichtung einstückig mit dem längenveränderlichen Element und das Federelement separat davon ausgebildet ist. Hierbei ist vorteilhaft, daß das Material des Federelementes gewählt werden kann, ohne daß die Erfordernisse, die an das Material des längenveränderlichen Elementes gestellt werden, berücksichtigt werden müssen.

Eine weitere vorteilhafte Ausgestaltung der erfindungsgemäßen Einrichtung ist dadurch gekennzeichnet, daß die Halteeinrichtung, das längenveränderliche Element und das Federelement einstückig ausgebildet sind. Diese Ausgestaltung hat herstellungstechnische Vorteile und hat auch Vorteile im Bezug auf die Betriebssicherheit und die Lebensdauer der Anordnung.

Eine weitere vorteilhafte Ausgestaltung der erfindungsgemäßen Einrichtung ist dadurch gekennzeichnet, daß die Halteeinrichtung und das Federelement einstückig und das längenveränderliche Element separat davon ausgebildet sind. Auch hier können die Halteeinrichtungen und das Federelement hergestellt werden, ohne auf das Material des längenveränderlichen Elements Rücksicht nehmen zu müssen.

Eine weitere vorteilhafte Ausgestaltung der erfindungsgemäßen Einrichtung ist dadurch gekennzeichnet, daß die Halteeinrichtung, das Federelement und der damit verbundene Halteklotz einstückig und das längenveränderliche Element separat davon ausgebildet sind.

Eine weitere vorteilhafte Ausgestaltung der erfindungsgemäßen Einrichtung ist dadurch gekennzeichnet, daß das Federelement durch Schlitze in dem längenveränderlichen Element beziehungsweise der Halteeinrichtung gebildet ist, die in einer Ebene parallel zu den Endflächen und senkrecht zur Längsrichtung des längenveränderlichen Elements liegen. Diese Schlitze sind besonders vorteilhaft dann anwendbar, wenn das längenveränderliche Element, die Halteeinrichtung und das Federelement oder alternativ wenigstens die Halteeinrichtung und das Federelement einstückig miteinander ausgebildet sind. Auch die Richtung der Schlitze ist insofern vorteilhaft, als bei einer Verdrehung der Schlitze beispielsweise um 90° die Stabilität in der kritischen Richtung senkrecht zur Chipebene nicht mehr hinreichend gewährleistet ist.

Eine weitere vorteilhafte Ausgestaltung der erfindungsgemäßen Einrichtung ist dadurch gekennzeichnet, daß eine gerade Zahl von Schlitzen vorgesehen ist. Dadurch können Kipptendenzen minimiert werden.

Eine weitere vorteilhafte Ausgestaltung der erfindungsgemäßen Einrichtung ist dadurch gekennzeichnet, daß das Federelement durch Bohrungen in dem längenveränderlichen Element beziehungsweise der Halteeinrichtung gebildet ist, die in einer Ebene parallel zu den Endflächen und senkrecht zur Längsrichtung des längenveränderlichen Elements liegen. Derartige Bohrungen können leicht maschinell hergestellt werden, wobei die Federkonstante des Federelements durch die Größe der Bohrungen einstellbar ist.

Eine weitere vorteilhafte Ausgestaltung der erfindungsgemäßen Einrichtung ist dadurch gekennzeichnet, daß die Länge des längenveränderlichen Elements so gewählt ist, daß das Federelement bei der Ausgangslage des längenveränderlichen Elements unter Vorspannung steht. Damit ist gewährleistet, daß die Halteeinrichtung sofern sie separat von dem längenveränderlichen Element ausgebildet ist, dem längenveränderlichen Element folgt, wenn sich dieses zusammenzieht.

Eine weitere vorteilhafte Ausgestaltung der erfindungsgemäßen Einrichtung ist dadurch gekennzeichnet, daß die beiden Halteklötze durch einen Bügel miteinander verbunden sind, wobei die Anordnung, bestehend aus den beiden Halteklötzen, dem längenveränderlichen Element, der Halteeinrichtung und dem Federelement eine größere Stabilität erhält.

Eine weitere vorteilhafte Ausgestaltung der erfindungsgemäßen Einrichtung ist dadurch gekennzeichnet, daß die beiden Halteklötze durch einen Rahmen miteinander verbunden sind, wobei zwischen den beiden Halteklötzen je ein Bügel oben und unten vorgesehen ist, und wobei die Bügel aus einem Stück mit den Halteklötzen hergestellt sind, sodaß sie mit diesen an dem Chip verklebt werden können.

Schließlich ist eine weitere vorteilhafte Ausgestaltung der erfindungsgemäßen Einrichtung dadurch gekennzeichnet, daß die Halteeinrichtung eine Ferrule aufweist, in der der Lichtwellenleiter beziehungsweise die optische Faser befestigt ist. Es wäre zwar auch möglich, die Faser an dem federnden Element ohne eine Ferrule, beispielsweise durch Verkleben in einer V-Nut, zu befestigen. Die Verwendung einer Ferrule ist jedoch wegen der Genauigkeit des Einbaus und der Vermeidung von Alterungserscheinungen an dem Klebstoff für das Verkleben der Faser in der V-Nut bevorzugt.

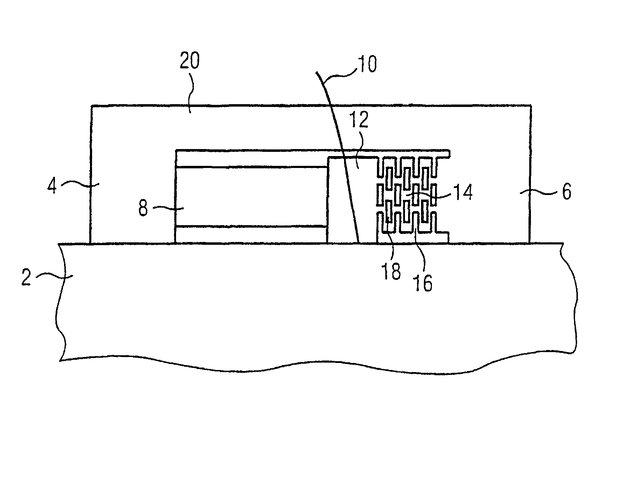

Ein Ausführungsbeispiel der Erfindung wird anhand der beiliegenden Zeichnung beschrieben, die eine Seitenansicht des Ausführungsbeispiels der erfindungsgemäßen Kopplungseinrichtung zeigt.

In der Figur ist eine Seitenansicht einer Kopplungseinrichtung gemäß einem Ausführungsbeispiel der Erfindung gezeigt, bei dem auf einem Lichwellenleiterchip 2 zwei Halteklötze 4,6 befestigt beziehungsweise verklebt sind. Einer der Halteklötze 4 trägt ein längenveränderliches Element 8. Eine Faser 10 ist an einer Halteeinrichtung 12 befestigt. Das längenveränderliche Element 8 ist zwischen dem einen Halteklotz 4 und einem Halteteil 12 für die Faser 10 eingeklemmt oder eingeklebt.

Das längenveränderliche Element 8 beziehungsweise der Halteteil 12 stützt sich über ein Federelement 14 an dem Halteklotz 6 ab. Das Federelement ist durch aüßere Schlitze 16 und innenliegende Schlitze 18 gebildet. Die Schlitze 16,18 können auch durch Bohrungen ersetzt werden. Im Bereich des Federelements 14 kann das Material auch schwammartig oder porös ausgebildet werden.

Bei dem Federelement 14 kommt es nur darauf an, daß die Wandstärke des Federelements im Vergleich zu der Wandstärke des Vollmaterials vermindert wird, um dem Federelement 14 die gewünschte Elastizität oder Federeigenschaft zu erteilen. Durch Wahl des Verhältnisses von verbleibender Wandstärke und Lochstärke kann die Elastizität in weiten Bereichen variiert werden.

Bei dem gezeigten Ausführungsbeispiel sind die beiden Halteklötze 4, 6 über einen Bügel 20 miteinander verbunden, der in der Ebene des Lichtleiterchips 2 liegt. Die beiden Halteklötze 4, 6 können auch über einen Rahmen miteinander verbunden sein, der zu der Fläche des Lichtleiterchips 2 senkrecht steht der dafür sorgt, daß die Kopplungseinrichtung insgesamt stabilisiert ist. Die Bügel können bei diesem Ausführungsbeispiel aus einem Stück hergestellt oder miteinander verklebt sein.

## Patentansprüche

1. Optische Kopplungseinrichtung zum Einkoppeln von Licht zwischen Endflächen zweier Lichtwellenleiter (2, 10), mit einer Halteeinrichtung (12) zum Halten des einen Lichtwellenleiters (10), einem Halteklotz (4), der an dem anderen Lichtwellenleiter (2) angebracht ist, einem langgestreckten, längenveränderlichen Element (8), das an dem einen Halteklotz (4) abgestützt ist und sich in seiner Längsrichtung ausgehend von dem einen Halteklotz (4) parallel zur Endfläche des anderen Lichtwellenleiters (2) erstreckt und an welchem die Halteeinrichtung vorgesehen ist, so daß die geometrische Position der Endfläche des einen Lichtwellenleiters (10), wie beispielsweise einer Lichtleiterfaser, gegenüber der Endfläche des anderen Lichtwellenleiters (2), wie beispielsweise eines Lichtleiterchips, veränderbar ist, einem anderen Halteklotz (6), der bezüglich der Längsrichtung des längenveränderlichen Elements (8) auf dessen von dem einen Halteklotz (4) abgewandten Seite angeordnet ist, und einem Federelement (14), das zwischen dem längenveränderlichen Element (8) und dem anderen Halteklotz (6) angeordnet und an diesem abgestützt ist und an dem das längenveränderliche Element (8) mit der daran vorgesehenen Halteeinrichtung gehalten ist, **dadurch gekennzeichnet, daß** das Federelement (14) in Form eines schwammartigen oder porösen Körpers mit senkrecht zur Längsrichtung des längenveränderlichen Elements (8) sowie parallel zur Endfläche des anderen Lichtwellenleiters (2) verlaufenden Ausnehmungen ausgebildet ist.

2. Einrichtung nach Anspruch 1, **dadurch gekennzeichnet, daß** die Halteeinrichtung einstückig mit dem längenveränderlichen Element (8) und das Federelement (14) separat davon ausgebildet ist.

3. Einrichtung nach Anspruch 1, **dadurch gekennzeichnet, daß** die Halteeinrichtung, das längenveränderliche Element (8) und das Federelement (14) einstückig ausgebildet sind.

4. Einrichtung nach Anspruch 1, **dadurch gekennzeichnet, daß** die Halteeinrichtung und das Federelement (14) einstückig und das längenveränderliche Element (8) separat davon ausgebildet sind.

5. Einrichtung nach Anspruch 1, **dadurch gekennzeichnet, daß** die Halteeinrichtung, das Federelement (14) und der damit verbundene Halteklotz (6) einstückig und das längenveränderliche Element (8) separat davon ausgebildet sind.

6. Einrichtung nach einem der Ansprüche 1 bis 5, **dadurch gekennzeichnet, daß** das Federelement (14) durch Schlitze (16, 18) in dem längenveränderlichen Element (8) beziehungsweise der Halteeinrichtung gebildet ist.

7. Einrichtung nach Anspruch 6, **dadurch gekennzeichnet, daß** eine gerade Zahl von Schlitzen vorgesehen ist.

8. Einrichtung nach einem der Ansprüche 1 bis 5, **dadurch gekennzeichnet, daß** das Federelement (14) durch Bohrungen in dem längenveränderlichen Element (8) beziehungsweise der Halteeinrichtung gebildet ist.

9. Einrichtung nach einem der vorhergehenden Ansprüche, **dadurch gekennzeichnet, daß** die Länge des längenveränderlichen Elements (8) so gewählt ist, daß das Federelement (14) bei der Ausgangslage des längenveränderlichen Elements (8) unter Vorspannung steht.

10. Einrichtung nach einem der vorhergehenden Ansprüche, **dadurch gekennzeichnet, daß** die beiden Halteklötze (4,6) durch einen Bügel (20) miteinander verbunden sind.

11. Einrichtung nach Anspruch 1, **dadurch gekennzeichnet, daß** die beiden Halteklötze (4, 6) durch einen Rahmen miteinander verbunden sind, wobei zwischen den beiden Halteklötzen (4, 6) je ein Bügel oben und unten vorgesehen ist.

12. Einrichtung nach einem der vorhergehenden Ansprüche, **dadurch gekennzeichnet, daß** die Halteeinrichtung eine Ferrule ist, in der der eine Lichtwellenleiter (10) beziehungsweise die optische Faser befestigt ist.

## Claims

1. An optical coupling device for injecting light between end faces of two optical-waveguides (2, 10) having a holding device (12) to hold the one optical wave-guide (10), a holding block (4) arranged at the other optical-waveguide (2), an elongated variable-length element (8) supported at the one holding block (4) and extends in its longitudinal direction beginning from the one holding block (4) parallel to the end face of the other optical-waveguide (2) and at which the holding device is provided so that the geometrical position of the end face of the one optical-waveguide (10), as for example an optical fiber, is variable with respect to the end face of the other optical-waveguide (2), as for example a fiber-optic chip, another holding block (6) which, with respect to the longitudinal direction of the variable-length element (8), is arranged at the side opposite to the one holding block (4), and a spring element (14) arranged between the variable-length element (8) and the other holding block (6) and supported at the other holding block (6) and at which the variable-length element (8) is hold with the holding device provided at it, **characterized in that** the spring element (14) in form of a spongily or porous body is designed with recesses being perpendicular to the longitudinal direction of the variable-length element (8) and parallel to the end face of the other optical-waveguide (2).

2. The device as claimed in claim 1, **characterized in that** the holding device is designed integrally with the variable-length element (8) and the spring element (14) is designed separately therefrom.

3. The device as claimed in claim 1, **characterized in that** the holding device, the variable-length element (8) and the spring element (14) are designed integrally.

4. The device as claimed in claim 1, **characterized in that** the holding device and the spring element (14) are designed integrally and the variable-length element (8) is designed separately therefrom.

5. The device as claimed in claim 1, **characterized in that** the holding device, the spring element (14) and the holding block (6) connected thereto are designed integrally and the variable-length element (8) is designed separately therefrom.

6. The device as claimed in one of claims 1 to 5, **characterized in that** the spring element (14) is formed by slots (16, 18) in the variable-length element (8) or the holding device.

7. The device as claimed in claim 6, **characterized in that** an even number of slots are provided.

8. The device as claimed in one of claims 1 to 5, **characterized in that** the spring element (14) is formed by bores in the variable-length element (8) or the holding device.

9. The device as claimed in one of the preceding claims, **characterized in that** the length of the variable-length element (8) is selected in such a way that the spring element (14) is under prestress in the starting position of the variable-length element (8).

10. The device as claimed in one of the preceding claims, **characterized in that** the two holding blocks (4, 6) are connected to one another by a link (20).

11. The device as claimed in claim 1, **characterized in that** the two holding blocks (4, 6) are connected to one another by a frame, a respective link being provided at the top and at the bottom between the two holding blocks (4, 6).

12. The device as claimed in one of the preceding claims, **characterized in that** the holding device is a ferrule in which the one optical-waveguide (10), or the optical fiber, is fastened.

## Revendications

1. Dispositif de couplage optique pour injecter de la lumière entre des surfaces terminales de deux guides d'ondes optiques (2, 10), comprenant un dispositif de maintien(12) pour maintenir le premier guide d'ondes optique (10), une cale de retenue (4), qui est appliquée sur l'autre guide d'ondes optique (2), un élément allongé (8) modifiable en longueur, qui s'appuie sur la première cale de retenue (4) et s'étend dans sa direction longitudinale à partir de la première cale de retenue (4) parallèlement à la surface terminale de l'autre guide d'ondes optique (2) et sur lequel est prévu le dispositif de maintien, de sorte que la position géométrique de la surface terminale du premier guide d'ondes optique (10), par exemple d'une fibre guide d'ondes optique, puisse être modifiée par rapport à la surface terminale de l'autre guide d'ondes optique (2), par exemple d'une puce guide d'ondes, une autre cale de retenue (6), qui est agencée, par rapport à la direction longitudinale de l'élément modifiable en longueur (8), sur son côté opposé à la première cale de retenue (4), et un élément élastique (14), qui est agencé entre l'élément modifiable en longueur (8) et l'autre cale de retenue (6) et s'appuie sur celle-ci sur lequel l'élément modifiable en longueur (8) est maintenu avec le dispositif de support qui y est prévu, **caractérisé en ce que** l'élément élastique (14) se présente sous la forme d'un corps spongieux ou poreux avec des cavités s'étendant perpendiculairement à la direction longitudinale de l'élément modifiable en longueur (8) ainsi que parallèlement à la surface terminale de l'autre guide d'ondes optique (2).

2. Dispositif selon la revendication 1, **caractérisé en ce que** le dispositif de maintien est formé d'une seule pièce avec l'élément modifiable en longueur (8) et l'élément élastique (14) en est séparé.

3. Dispositif selon la revendication 1, **caractérisé en ce que** le dispositif de maintien, l'élément modifiable en longueur (8) et l'élément élastique (14) sont formés d'une seule pièce;

4. Dispositif selon la revendication 1, **caractérisé en ce que** le dispositif de maintien et l'élément élastique (14) sont formés d'une seule pièce et l'élément modifiable en longueur (8) en est séparé.

5. Dispositif selon la revendication 1, **caractérisé en ce que** le dispositif de maintien, l'élément élastique (14) et la cale de retenue (6) qui lui est liée sont formés d'une seule pièce et l'élément modifiable en longueur (8) en est séparé.

6. Dispositif selon l'une quelconque des revendications 1 à 5, **caractérisé en ce que** l'élément élastique (14) est formé par des fentes (16, 18) ménagées dans l'élément modifiable en longueur (8), ou dans le dispositif de maintien.

7. Dispositif selon la revendication 6, **caractérisé en ce qu'**il est prévu un nombre pair de fentes.

8. Dispositif selon l'une quelconque des revendications 1 à 5, **caractérisé en ce que** l'élément élastique (14) est formé par des perçages effectués dans l'élément modifiable en longueur (8), ou dans le dispositif de maintien.

9. Dispositif selon l'une quelconque des revendications précédentes, **caractérisé en ce que** la longueur de l'élément modifiable en longueur (8) est choisi de sorte que l'élément élastique (14) soit sous précontrainte dans la position de départ de l'élément modifiable en longueur (8).

10. Dispositif selon l'une quelconque des revendications précédentes, **caractérisé en ce que** les deux cales de retenue (4, 6) sont reliées l'une à l'autre par un étrier (20).

11. Dispositif selon la revendication 1, **caractérisé en ce que** les deux cales de retenue (4, 6) sont reliées l'une à l'autre par un cadre, un étrier étant respectivement prévu au-dessus et au-dessous entre les deux cales de retenue (4, 6).

12. Dispositif selon l'une quelconque des revendications précédentes, **caractérisé en ce que** le dispositif de maintien est une virole, dans laquelle est fixé(e) le premier guide d'ondes optique (10), ou la fibre optique.
